# EUROPEAN PATENT APPLICATION

(11) **EP 3 945 746 A1**
(43) Date of publication of application: **02.02.2022**
(21) Application number: 20187809.7
(22) Date of filing: 26.07.2020
(51) Int. Cl.: H05B 3/42, B60H 1/22, F24H 3/04

(54) **ELECTRIC FLUID HEATER**

(71) Applicant: Valeo Klimasysteme GmbH, 96476 Bad Rodach (DE)
(72) Inventor: FERLAY, Benjamin, 96476 Bad Rodach (DE); SZOSTEK, Dawid, 32 050 Skawina (PL); JURKIEWICZ, Damian, 32 050 Skawina (PL)
(74) Representative: Valeo Systèmes Thermiques

(57) **Abstract**

Electric fluid heater for a vehicle, comprising a heating block 1 comprising a housing with an inlet 2 and an outlet 3, the housing forming a first channel 100 for the fluid intended to flow between the inlet 2 and the outlet 3, at least one tube 20 located within the first channel 100, the tube 20 comprising a heating element 50, an electronics unit 70 for controlling the operation of the electric fluid heater, characterized in that the electric fluid heater further comprises a second channel 200 for the fluid intended to flow between the inlet 2 and the outlet 3, wherein the second channel 200 is remote with respect to the first channel 100 and is configured to exchange heat with the electronics unit 70.

## Description

### FIELD OF THE INVENTION

The field of the present invention is that of devices for heating and circulating a fluid for vehicles. The invention applies more particularly to electric heating and/or air-conditioning devices for motor vehicles comprising such devices.

### BACKGROUND OF THE INVENTION

It is known that the heating of the air intended for heating the passenger compartment of a motor vehicle, or for demisting or defrosting, is provided by the passage of a flow of air through a heat exchanger, more precisely by a heat exchange between this flow of air and a fluid circulating inside the exchanger. This may in particular be the cooling fluid in the case of a heat engine.

In the case of an electric vehicle, it is also known to use an air-conditioning loop operating in heat pump mode for air heating. However, this mode of air heating can also be unsuitable or insufficient.

This is because the performance of the air-conditioning circuit in heat pump mode depends on the outdoor climatic conditions. For example, when the outside air is too cold, the air cannot be heated to a temperature sufficient to warm the passenger compartment. In this context, it is known to add to the fluid circulation loops an additional electric device for thermal conditioning of the fluid such as an additional electric heating device. Such an additional electric heating device can be adapted to heat a suitable fluid upstream of the heat exchanger. In a known way, such an electric additional heating device comprises one or more thermal modules in contact with the fluid to be heated. More precisely, and as may be disclosed in particular in document WO15082434, a thermal module may comprise a core and a heating element surrounding the core, both being spaced apart in order to define a fluid circulation space between the core and the inner surface of the heating element. The heating element is a source of thermal energy. The heating element has electric heating means, e.g. one or more heating resistors serigraphically formed as serigraphic resistive tracks on the outer surface of the heating element. A fluid circulation in the circulation space between the core and the heating element ensures a heat transfer between the heating element and the fluid. In order to obtain sufficient heating power for the desired operation, it may be necessary to multiply the thermal modules in the same additional electric heating device.

Fluid circulation is facilitated by a pump, which is arranged upstream or downstream of the heat exchanger on a fluid circulation pipe.

The present invention relates to an electric heating block, such as a heating block for a motor vehicle. Electric heating block comprising tubes for receiving heating elements are known as electric heating blocks. Such heating elements include, for example, PTC (positive temperature coefficient) resistors. Such heating blocks also include heat sinks, e.g. fins, in thermal contact with the heating elements. The tubes serve to electrically insulate the heating elements from the outside while allowing thermal conduction between the heating elements and the heat sinks.

It is known to provide an electronics unit for controlling the operation of the electric fluid heater. Such unit may need additional cooling to ensure proper and continuous operation of the assembly.

It would be desirable to provide an electric heater comprising an electronics unit for controlling its, which would be suitable for proper and continuous operation.

### SUMMARY OF THE INVENTION

The object of the invention is an electric fluid heater for a vehicle, comprising a heating block comprising a housing with an inlet and an outlet, the housing forming a first channel for the fluid intended to flow between the inlet and the outlet, at least one tube located within the first channel, the tube comprising a heating element, an electronics unit for controlling the operation of the electric fluid heater, characterized in that the electric fluid heater further comprises a second channel for the fluid intended to flow between the inlet and the outlet, wherein the second channel is remote with respect to the first channel and is configured to exchange heat with the electronics unit.

Preferably, the second channel is parallel to the first channel.

Preferably, the second channel is interposed between the first channel and the electronic unit.

Preferably, the electronics unit is located between the inlet and the outlet.

Preferably, the second channel is connected directly with the inlet and the outlet.

Preferably, the second channel is connected with the inlet and the outlet at least partly by the first channel.

Preferably, the housing is formed by a plurality of plates comprising a top plate on which the inlet and/or the outlet is located and a side plate arranged perpendicularly to the top plate, wherein the heating block further comprises an additional plate forming together with the plates the second channel, the additional plate being in contact with the electronics unit.

Preferably, the second channel is formed by the additional plate and the top plate.

Alternatively, the second channel is formed by the additional plate and the side plate.

Preferably, the first side plate comprises openings enabling fluid flow to and from the second channel.

Preferably, the openings are located in the vicinity of the inlet and the outlet.

Preferably, the electronic unit is attached to the respective plate by means of a clamp.

Preferably, one of the side walls faces the inlet and/or the outlet.

Preferably, the openings face a large wall of the tube.

Preferably, the openings face a side wall of the tube.

### BRIEF DESCRITPTION OF DRAWINGS

Examples of the invention will be apparent from and described in detail with reference to the accompanying drawings, in which:
- Fig. 1: shows an example of an electric heater;
- Fig. 2: shows an exemplary tube for the heater;
- Fig. 3: shows an example of the heater according to the invention;
- Fig. 4: shows a partial section of the heater of Fig. 3;
- Fig. 5: shows another example of the heater according to the invention;
- Fig. 6: shows the heater of Fig. 5 with some of its components hidden;
- Fig. 7: shows another example of the heater according to the invention;
- Fig. 8: shows the heater of Fig. 7 with some of its components hidden.

### DETAILED DESCRIPTION OF EMBODIMENTS

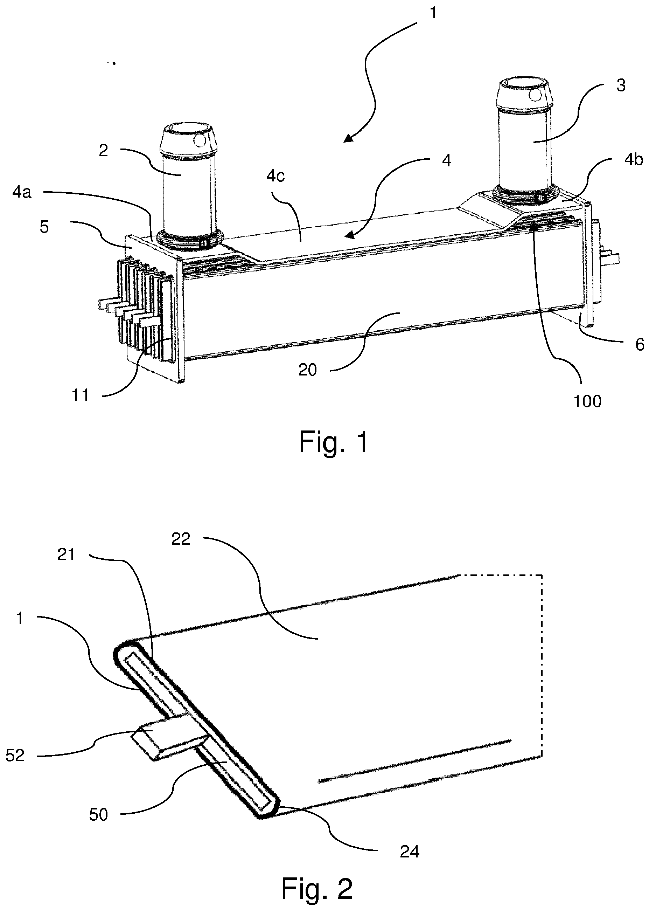

As illustrated in Figure 1, the invention relates to an electric heating block 1. The said heating block 1 is intended to be supplied with electric current to heat a fluid passing through the said block 1.

The electric heating block 1 advantageously presents a substantially parallelepipedal configuration. It is intended to exchange heat with a fluid passing between an inlet 2, between and around tubes 20, and outlet 3.

The heating block 1 comprises at least one channel 100, through which a fluid, in particular coolant, is to flow, and at least one tube 20 with one or more electric heating elements 50. The tubes 20 are mounted in headers 5 and 6, which in turn are connected by top plate 4. To the top plate 4 there are connected also the inlet 2 and the outlet 3 for the fluid. In particular, the top plate 4 comprises raised portions 4a and 4b, which are connected to each other by a connecting portion 4c. Since the raised portions 4a and 4b are located at a different distance from the tubes 20 than the connecting portion 4c, i.e. at the greater distance from the tubes 20, the fluid is enabled to flow more freely in the vicinity of the inlet 2 and the outlet 3, thereby facilitating its distribution between and around the tubes 20. The channel 100 for the fluid is closed by two side plates and a bottom plate (not shown), so that the fluid path is limited and an efficient heat exchange with the tubes 20 can take place. Preferably, the side and bottom plates are connected directly to the headers 5, 6.

The heating block 1 here comprises several tubes 20 (shown in Fig. 2) and, preferably, several fins alternately stacked in a vertical stacking direction as shown in the figure (the fins are not shown). The tubes 20 are positioned parallel to each other. These tubes 20 are used to electrically insulate and protect the heating element(s) 50 from the outside. The fins form heat sinks, which increase the heat exchange surface with the fluid.

Heating elements 50 are, for example, PTC resistors (for positive temperature coefficient). Each tube 20 may have several heating elements, which may be arranged one after the other in a direction of the tube 20. The heating elements 50 are preferably distributed evenly along the tubes 20.

The tubes 20 together with the heating elements 50 form heating units. The heating units are preferably supplied with power selectively. This means that the heating elements 50 of each heating unit are supplied with current independently of the heating elements 50 of the other heating units and can therefore be supplied with a different current, in particular in terms of its intensity, from the current flowing through the other heating units.

The heating units also have electrodes 52 on both sides of the heating elements 50 for their power supply. The said heating units further comprise electrically insulating and thermally conductive material layers, the said layers 54 being located between one of the electrodes 52 and a large wall 21 of the tube 20. In this way, the tube 20 is electrically insulated from the electrodes 52 and the heating elements 50 but thermally in contact with them.

Preferably, in each of the heating units, said heating elements 50 are electrically connected in parallel, in particular by means of the electrodes 52.

The fins are in thermal contact with the tubes 20. The said fins are positioned between the said tubes 20, in particular between the large walls 21 of the said tubes 20.

The tubes 20 have two side walls 24 connecting the large walls 21. The large walls 21 each have an external face 22 to which the fin 10 is fixed and an internal face intended to come into thermal contact with the heating elements 50. Thermal contact involves heat exchange between the elements, even if the elements are not in direct physical contact with each other. The function of the large walls 21 is to transmit the heat generated by the electric heating elements 50 to the fins. The tube 20 can be made of any material suitable for use in an electric heating block 1. In particular, tube 20 is made of aluminium and/or aluminium alloy.

Advantageously, the inner faces of the side walls 24 of the tube 20 have a substantially vertical profile, if necessary slightly rounded.

Preferably, one of the side walls 24 faces the inlet 2 and/or the outlet 3 of the heater.

Both the large walls 21 and the side walls 24 are made from the material of the tube 20. Even if several parts are defined, the tube is a single piece.

Fin is advantageously attached to one or both of the large walls 21 of tube 20 by brazing. This fin fixing technique has several advantages. First of all, brazing the fins to tube 20 improves the heat exchange between the heating elements 50 and the fins. In addition, once tube 20 has been brazed, the material of tube 20, for example aluminium, will be more malleable and more easily deformable than before the brazing step, even after it has cooled to room temperature. This reduces the elastic relaxation that the material may have after deformation. In addition, this state of material guarantees a tight contact between the tube 20 and the heating elements 50 and therefore a better heat exchange. Brazing also ensures a longer life for tube 20 as it will be less sensitive to temperature changes and relaxation during the life of heating block 1.

As stated above, a heating block 1 according to the invention allows the use of fins less resistant and more thermally efficient than in a conventional heating block. Advantageously, the fins of the heating block 1 are flexible before assembly. They are in particular corrugated fins. Another advantage is that the fins may include louvers to promote heat exchange.

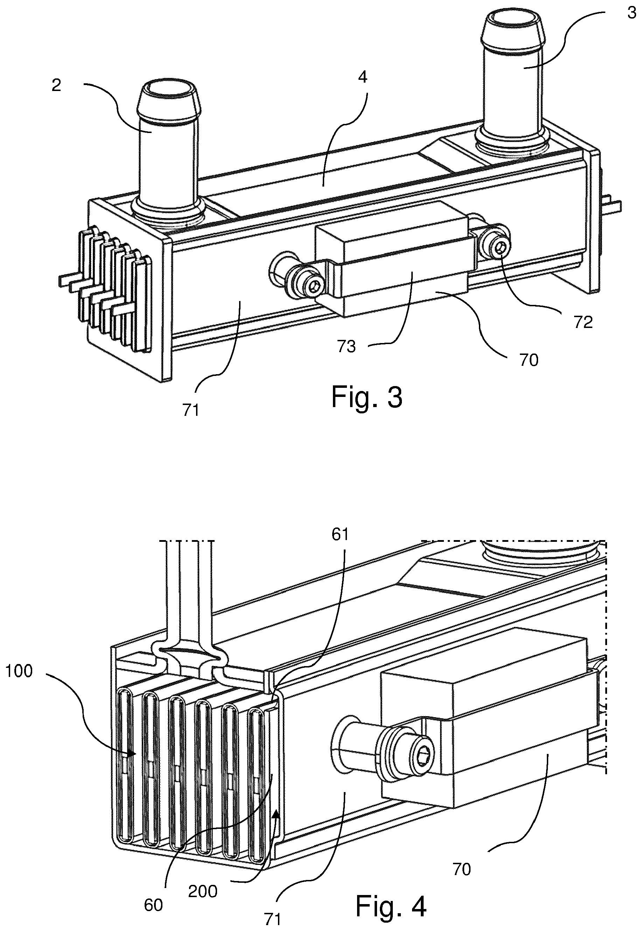

Fig. 3 shows an example of the heater according to the invention, while Fig. 4 shows a partial section of the heater of Fig. 3. It comprises an electronic unit 70 for controlling the operation of the electric fluid heater, e.g. controlling the heating elements 50. In addition to the first channel 100, the electric fluid heater further comprises a second channel 200 for the fluid intended to flow between the inlet 2 and the outlet 3. The second channel 200 is remote with respect to the first channel 100 and is configured to exchange heat with the electronics unit 70. For example, the second channel 200 is parallel to the first channel 100. The second channel 200 is interposed between the first channel 100 and the electronic unit 70. The housing is formed by a plurality of plates comprising a top plate 4 on which the inlet 2 and/or the outlet 3 is located. Further, the housing may be formed by a side plate 60 arranged perpendicularly to the top plate 4. The heating block further comprises an additional plate 71 forming together with one of the plates the second channel 200, the additional plate 71 being in contact with the electronics unit 70. In this case, the second channel 200 is formed by the additional plate 61 and the side plate 60. The side plate 60 comprises openings 61 enabling fluid flow to and from the second channel 200. Preferably, the openings 61 are located in the vicinity of the inlet 2 and the outlet 3, i.e. one opening per side. The fluid enters the second channel through the first opening 61, travels in the space between plates 71 and 60, and then exits through the second opening 61 toward an outlet. In this case, the openings 61 open above the tubes 20. However, in different embodiment, the openings 61 may face a large wall 21 of the tube 20. In such case, side plate 60 is distanced from the last tube 20. The electronic unit 70 is attached to the respective plate by means of a clamp 73. Clamp 73 is held against the electronics unit using attachment screws 72. Naturally, other means of fixing the electronic unit 70 with respect to the additional plate 71 are possible.

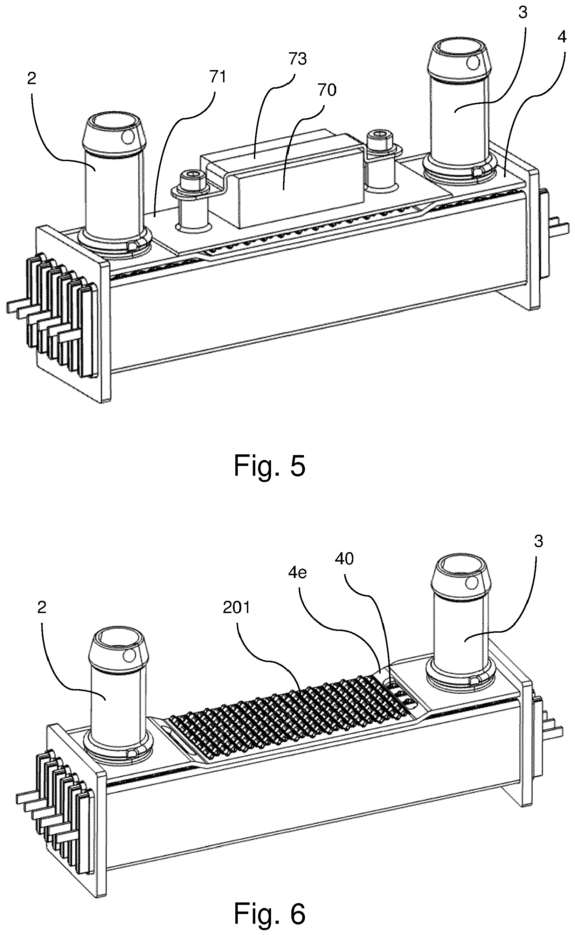

Fig. 5 shows another example of the heater according to the invention, while Fig. 6 shows the heater of Fig. 5 with some of its components hidden. In this example, the electronics unit 70 is located between the inlet 2 and the outlet 3. The second channel 200 is formed by the additional plate 71 and the top plate 4. The second channel 200 is connected with the inlet 2 and the outlet 3 partly by the first channel 100. In other words, the fluid for cooling the electronics unit must come from the first channel 100 and exits to channel 100 as well. The inclined portions 4e of the top plate 4 comprise openings 40 for the fluid from and to the first channel 100. The second channel may comprise a fin or turbulator 201 for promoting heat exchange. Preferably, the openings 40 are located in the vicinity of the inlet 2 and the outlet 3.

In another option, the second channel 200 may be connected directly with the inlet 2 and the outlet 3. This means that the fluid in channel 200 does not come from and does not exit to channel 100. In any case, preferably, the electronic unit 70 is attached to the respective plate by means of a clamp 73.

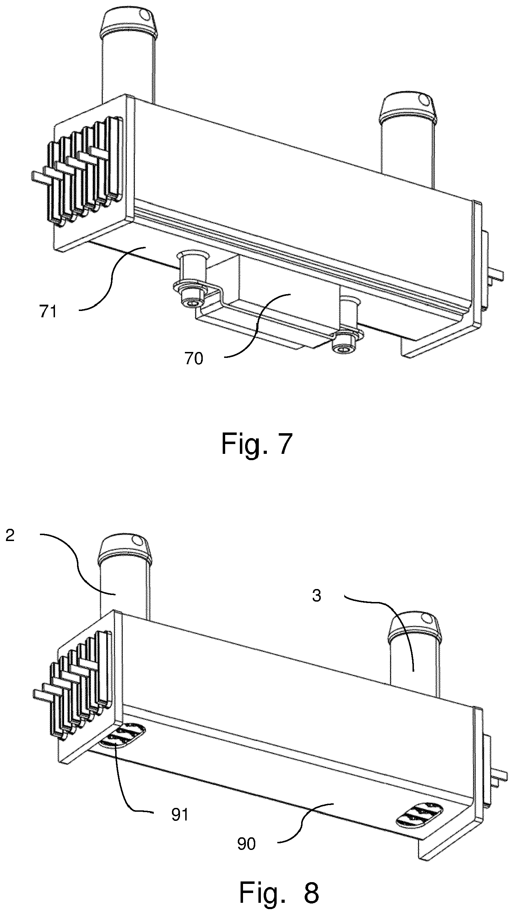

Fig. 7 shows another example of the heater according to the invention, while Fig. 8 shows the heater of Fig. 7 with some of its components hidden. The electronics unit 70 is fixed to the bottom side of the heater, opposite to the inlet 2 and/or outlet 3. The second channel is formed by a bottom plate 90 with openings 91.

In any case, the second channel may comprise a fin or turbulator 201 for promoting heat exchange.

Other variations to the disclosed embodiments can be understood and effected by those skilled in the art in practicing the claimed invention, from a study of drawings, the disclosure, and the appended claims. The mere fact that certain measures are recited in mutually different dependent claims does not indicate that a combination of these measures cannot be used to the advantage.

## Claims

1. Electric fluid heater for a vehicle, comprising a heating block 1 comprising a housing with an inlet 2 and an outlet 3, the housing forming a first channel 100 for the fluid intended to flow between the inlet 2 and the outlet 3, at least one tube 20 located within the first channel 100, the tube 20 comprising a heating element 50, an electronics unit 70 for controlling the operation of the electric fluid heater, **characterized in that** the electric fluid heater further comprises a second channel 200 for the fluid intended to flow between the inlet 2 and the outlet 3, wherein the second channel 200 is remote with respect to the first channel 100 and is configured to exchange heat with the electronics unit 70.

2. Electric fluid heater according to claim 1, wherein the second channel 200 is parallel to the first channel 100.

3. Electric fluid heater according to any preceding claim, wherein the second channel 200 is interposed between the first channel 100 and the electronic unit 70.

4. Electric fluid heater according to any preceding claim, wherein the electronics unit 70 is located between the inlet 2 and the outlet 3.

5. Electric fluid heater according to any preceding claims, wherein the second channel 200 is connected directly with the inlet 2 and the outlet 3.

6. Electric fluid heater according any of claims 1 to 4, wherein the second channel 200 is connected with the inlet 2 and the outlet 3 at least partly by the first channel 100.

7. Electric fluid heater according to any preceding claims, wherein the housing is formed by a plurality of plates comprising a top plate 4 on which the inlet 2 and/or the outlet 3 is located and a side plate 60 arranged perpendicularly to the top plate 4, wherein the heating block further comprises an additional plate 71 forming together with the plates the second channel 200, the additional plate 71 being in contact with the electronics unit 70.

8. Electric fluid heater according to claim 7, wherein the second channel 200 is formed by the additional plate 71 and the top plate 4.

9. Electric fluid heater according to claim 7, wherein the second channel 200 is formed by the additional plate 71 and the side plate 60.

10. Electric fluid heater according to claim 9, wherein the first side plate 60 comprises openings 61 enabling fluid flow to and from the second channel 200.

11. Electric fluid heater according to claim 10, wherein the openings 61 are located in the vicinity of the inlet 2 and the outlet 3.

12. Electric fluid heater according to any of claims 7 to 11, wherein the electronic unit 70 is attached to the respective plate by means of a clamp 73.

13. Electric fluid heater according to any of the preceding claims, wherein the tube 20 comprises two side walls 24 and two large walls 21, wherein one of the side walls 24 faces the inlet 2 and/or the outlet 3.

14. Electric fluid heater according to claim 13, wherein the openings 61 face a large wall 21 of the tube 20.

15. Electric fluid heater according to claim 13, wherein the openings 61 face a side wall 24 of the tube 20.
